(19) Europäisches Patentamt
European Patent Office
Office européen des brevets

(11) Numéro de publication: **0 242 247 B1**

(12) **FASCICULE DE BREVET EUROPEEN**

(45) Date de publication du fascicule du brevet: **19.07.89**

(51) Int. Cl.⁴: **C07F 7/18**

(21) Numéro de dépôt: **87400548.1**

(22) Date de dépôt: **12.03.87**

(54) **Procédé de préparation d'un halogéno-6 méthyl-3 trialkylsilyloxy-1 hexatriène-1,3,5.**

(30) Priorité: **14.03.86 FR 8603669**

(43) Date de publication de la demande:
**21.10.87 Bulletin 87/43**

(45) Mention de la délivrance du brevet:
**19.07.89 Bulletin 89/29**

(84) Etats contractants désignés:
**AT BE CH DE FR GB IT LI LU NL SE**

(56) Documents cités:
**FR-A- 2 503 166**
**US-A- 3 472 888**

**THE JOURNAL OF ORGANIC CHEMISTRY, vol. 34, no. 8, août 1969, pages 2324-2336; H.O. HOUSE et al.: "The chemistry of carbanions. XVIII. Preparation of trimethylsilyl enol ethers"**

(73) Titulaire: **RHONE-POULENC SANTE, 20, avenue Raymond Aron, F-92160 Antony(FR)**

(72) Inventeur: **Duhamel, Lucette, 32 rue Jacques Boutrolle, F-76130 Mont-Saint-Aignan(FR)**
Inventeur: **Duhamel, Pierre, 32 rue Jacques Boutrolle, F-76130 Mont-Saint-Aignan(FR)**
Inventeur: **Lecouve, Jean-Pierre, 23 E rue de l'Oratoire, F-69300 Caluire(FR)**

(74) Mandataire: **Pilard, Jacques et al, RHONE-POULENC INTERSERVICES Service Brevets Pharma 25, Quai Paul Doumer, F-92408 Courbevoie Cédex(FR)**

EP 0 242 247 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de préparation d'halogéno-6 méthyl-3 trialkylsilyloxy-1 hexatriène-1, 3, 5 de formule générale:

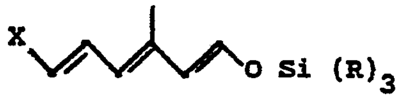 (I)

dans laquelle X représente un atome d'halogène, de préférence un atome de brome, et R représente un radical alkyle contenant 1 à 4 atomes de carbone.

Les produits de formule générale (I) sont particulièrement utiles en synthèse terpénique, par exemple pour préparer le rétinal à partir de la β-ionone.

Dans le brevet français Fr 8 106 500 (2 503 166), est décrite, en particulier, la préparation du bromo-2 triméthylsilyloxy-1 éthylène par action du brome sur l'éther d'énol trialkylsilyle correspondant suivie de la déhydrohalogénation par action d'une amine tertiaire. Cependant ce procédé ne conduit pas toujours à des résultats satisfaisants lors de la préparation d'homologues supérieurs.

H.O. House et coll., J. Org. Chem., <u>34</u>, 2324 (1969) décrivent la préparation d'éthers d'énols triméthylsilylés par action du chlorotriméthylsilane et de la triéthylamine dans le diméthylformamide sur un aldéhyde ou une cétone en opérant dans le diméthylformamide au reflux pendant 48 heures. Le procédé ne peut être appliqué qu'à des aldéhydes ou des cétones qui sont thermiquement stables.

Il a maintenant été trouvé, et c'est ce qui fait l'objet de la présente invention, que les produits de formule générale (I) peuvent être obtenues, avec de bons rendements, par action d'un halogénosilane (bromotriméthylsilane) en présence d'une amine tertiaire (triéthylamine) sur un halogéno-6 méthyl-3 hexadiène-3,5 al en opérant dans un solvant organique inerte tel qu'un hydrocarbure aliphatique (pentane) ou un nitrile (acétonitrile) ou un mélange de ces solvants à une température comprise en −10 et 30°C.

L'halogéno-6 méthyl-3 hexadiène-3,5 al peut être obtenu par hydrolyse d'un produit de formule générale:

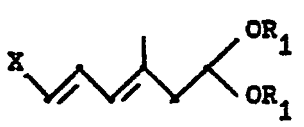 (II)

dans laquelle X représente un atome d'halogène et $R_1$ représente un radical alkyle contenant 1 à 4 atomes de carbone, au moyen d'un acide minéral (acide bromydrique) en milieu hydroorganique (acétoneeau).

Le produit de formule générale (II) peut être obtenu par action d'un halogénure d'halométhylphosphonium, tel que le bromure de bromométhyltriphénylphosphonium, sur un dialcoxy-5,5 méthyl-3 pentène-2 al en opérant en présence d'un alcoolate de métal alcalin, tel que le tertiobutylate de potassium, dans un solvant organique anhydre, tel que le tétrahydrofuranne, à une température comprise entre −70 et 0°C.

Le dialcoxy-5,5 méthyl-3 pentène-2 al peut être préparé selon le procédé décrit dans le brevet français FR 7 715 070 (2 391 181).

Les produits de formule générale (I), transformés en dérivé métallique par échange halogène-métal, peuvent réagir avec les composés carbonylés, (aldéhydes, cétones) dans les conditions décrites dans le brevet français FR 8 106 500 (2 503 166).

Les exemples suivants, donnés à titre non limitatif, illustrent la présente invention.

### EXEMPLE 1

1–1 – Préparation du bromo-6 méthyl-3 triméthylsilyloxy-1 hexatriène-1, 3, 5

Dans un ballon de 100 cm3 muni d'un septum et d'une agitation magnétique, on introduit, sous atmosphère d'argon, 0,95 g de bromo-6 méthyl-3 hexadiène-3,5 al (5 m.moles) en solution dans 25 $cm^3$ d'acétonitrile et 25 $cm^3$ de pentane.

On ajoute ensuite 1 g de triéthylamine (10 m.moles soit 2 équivalents). On refroidit à 0°C puis on ajoute, goutte à goutte, 1,53 g de bromotriméthylsilane (2 équivalents). On laisse revenir à une température voisine de 20°C. La réaction est complète après 48 heures. La phase acétonitrile est extraite par 4 fois 15 $cm^3$ de pentane en opérant sous atmosphère d'argon.

Après évaporation du solvant et distillation, on obtient 0,53 g de bromo-6 méthyl-3 triméthylsilyloxy-1 hexatriène-1, 3, 5 (P.E.$_{0,06\ kPa}$= 92–95°C).

Le rendement est de 46,8%.

La structure du produit obtenu est confirmée par le spectre infra-rouge et le spectre de résonance magnétique nucléaire du proton.

1–2 – Préparation du produit de départ

a) Le bromo-6 méthyl-3 hexadiène-3,5 al peut être préparé de la manière suivante:

Dans un ballon tricol de 250 $cm^3$ muni d'un réfrigérant, d'un thermomètre, d'un septum et d'une agitation magnétique, on introduit, sous atmosphère d'argon, 1,25 g de bromo-6 méthyl-3 diméthoxy-1,1 hexadiène-3,5 (5,31 m.moles) en solution dans 48 $cm^3$ d'acétone.

On ajoute 0,7 $cm^3$ d'eau puis 0,1 g de ionol. On chauffe au reflux pendant 1 minute. On ajoute alors 0,6 $cm^3$ d'une solution de 141 $cm^3$ d'acétone et de 3 $cm^3$ d'acide bromhydrique aqueux à 48% et laisse pendant 40 minutes de reflux. La solution devient brune.

On refroidit à une température voisine de 20°C puis on ajoute rapidement 50 $cm^3$ de pentane puis 1 $cm^3$ d'une solution aqueuse de bicarbonate de sodium à 5% et agite vigoureusement pendant 15 minutes.

On extrait par 5 fois 20 $cm^3$ de pentane puis on lave la phase organique par 2 fois 3 $cm^3$ d'eau jusqu'à neutralité.

Les phases organiques réunies sont séchées sur carbonate de sodium. Après filtration et évaporation du solvant, on obtient 0,85 g d'un produit brut contenant 0,75 g de bromo-6 méthyl-3 hexadiène-3,5 al et 0,1 g de ionol.

Le rendement est de 75%.

La structure du produit obtenu est confirmé par le spectre infra-rouge et par le spectre de résonance magnétique nucléaire du proton.

b) Le bromo-6 méthyl-3 diméthoxy-1,1 hexadiène-3,5 peut être préparé de la manière suivante:

Dans un ballon tricol de 500 $cm^3$, muni d'une agitation magnétique et d'un thermomètre, on introduit, sous atmosphère d'argon, 12,24 g de bromure de bromométhyltriphénylphosphonium (32,8 m.moles) en suspension dans 160 $cm^3$ de tétrahydrofuranne anhydre. On refroidit à –70°C puis on ajoute, en 10 minutes, par petites fractions, 3,15 g de tertiobutylate de potassium (32,8 m.moles). On agite pendant 1 heure 30 minutes à –70°C.

La suspension blanche devient orangée. On ajoute alors, en 10 minutes à –70°C, 3,3 g de diméthoxy-5,5 méthyl-3 pentène-2 al (20,9 m.moles soit 0,75 équivalent) en solution dans 17 $cm^3$ de tétrahydrofuranne. Le mélange réactionnel est maintenu pendant 1 heure à 0°C puis pendant 1 heure 30 minutes à une température voisine de 20°C.

On ajoute rapidement 85 $cm^3$ d'eau puis on agite vigoureusement pendant 10 minutes.

On reprend le mélange réactionnel par 100 $cm^3$ d'éther. Après décantation la phase aqueuse est extraite par 6 fois 40 $cm^3$ d'éther.

Les phases organiques sont séchées sur sulfate de magnésium. Après filtration et évaporation des solvants, on obtient une huile épaisse à laquelle on ajoute 10 g de sable. Après filtration sur silice en éluant avec du pentane on obtient 4,13 g de bromo-6 méthyl-3 diméthoxy-1,1 hexadiène-3,5.

Le rendement par 84%

La structure du produit obtenu est confirmée par le spectre infra-rouge et le spectre de résonance magnétique nucléaire du proton.

EXEMPLE 2

Utilisation du produit de l'exemple 1 dans les conditions du FR 2 503 166

Dans un ballon de 25 $cm^3$ muni d'une agitation magnétique, d'un thermomètre et d'un septum, on introduit, sous atmosphère d'argon, 0,44 g de bromo-6 méthyl-3 triméthylsilyloxy-1 hexatriène-1,3,5 (1,9 m.moles) en solution dans 12 $cm^3$ d'éther anhydre.

On refroidit à –70°C puis on ajoute, en 7 minutes, 1,5 $cm^3$ de tertiobutyllithium 1,7N dans le pentane (2,85 m.moles soit 1,5 équivalent). On laisse pendant 70 minutes à –70°C. On ajoute alors à cette température 0,33 g de β–ionone (1,71 m.mole soit 0,9 équivalent) en solution dans 4 $cm^3$ d'éther.

Le mélange réactionnel est maintenu pendant 40 minutes entre –20 et –30°C. On refroidit à –60°C puis on ajoute rapidement 5,7 $cm^3$ d'acide chlorhydrique N. Le mélange réactionnel est maintenu dans un bain à 0°C pendant 5 minutes puis à une température voisine de 20°C pendant 30 minutes en agitant vigoureusement. Le mélange réactionnel jaune doré est repris à l'éther.

Après décantation la phase aqueuse est extraite à l'éther. Les phases organiques réunies sont lavées à l'eau jusqu'à neutralité puis séchées sur carbonate de sodium.

Après filtration et évaporation du solvant, on obtient 0,58 g de produit burt qui est purifié par chromatographie.

En éluant avec le mélange éther de pétrole-éther (98,5–1,5 en volumes) on obtient 0,112 g de rétinal.

Le taux de transformation de la β–ionone est de 37%.

Le rendement est de 23% par rapport au bromo-6 méthyl-3 triméthylsilyloxy-1 hexatriène-1,3,5 et il est de 62% par rapport à la β–ionone ayant réagi.

**Revendications**

1. Procédé de préparation d'un halogéno-6 méthyl-3 trialkylsilyloxy-1 hexatriène-1,3,5 de formule générale:

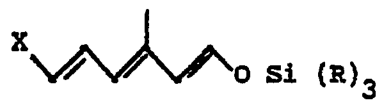

dans laquelle X représente un atome d'halogène et R représente un radical alkyle contenant 1 à 4 atomes de carbone caractérisé en ce que l'on fait réagir un halogénosilane en présente d'une amine tertiaire sur un halogèno-6 méthyl-3 hexadiène-3,5 al en opérant dans un solvant organique inerte à une température comprise entre –10 et +30°C.

2. Procédé selon la revendication 1 caractérisé en ce que l'on fait réagir le bromotriméthylsilane en présente de triéthylamine.

3. Procédé selon la revendication 1 caractérisé en ce que l'halogéno-6 méthyl-3 hexadiène-3,5 al est le bromo-6 méthyl-3 hexadiène-3,5 al.

**Patentansprüche**

1. Verfahren zur Herstellung eines 6-Halogen-3-methyl-1-trialkylsilyloxy-1,3,5-hexatriens der allgemeinen Formel:

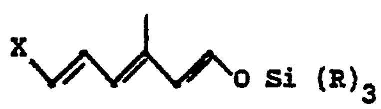

in welcher X ein Halogenatom darstellt und R einen Alkylrest mit 1 bis 4 Kohlenstoffatomen darstellt, dadurch gekennzeichnet, daß man ein Halogensilan in Gegenwart eines tertiären Amins mit einem 6-Halogen-3-methyl-3,5-hexadienal reagieren läßt, wobei man in einem inerten organischen Lösungsmittel bei einer Temperatur zwischen –10 und +30°C arbeitet.

2. Verfahren nach Anspruch 1, dadurch gekennzeichnet, daß man Bromtrimethylsilan in Gegenwart von Triäthylamin reagieren läßt.

3. Verfahren nach Anspruch 1, dadurch gekennzeichnet, daß das 6-Halogen-3-methyl-3,5-hexadienal 6-Brom-3-methyl-3,5-hexadienal ist.

**Claims**

1. Process for the preparation of a 6-halo-3-methyl-1-trialkylsilyloxy-1,3,5-hexatriene of general formula:

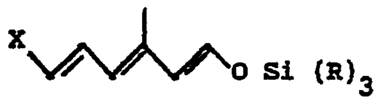

in which X denotes a halogen atom and R denotes an alkyl radical containing 1 to 4 carbon atoms, characterized in that a halosilane is reacted in the presence of a tertiary amine with a 6-halo-3-methyl-3,5-hexadienal, the operation being carried out in an inert organic solvent at a temperature of between −10 and +30°C.

2. Process according to Claim 1, characterized in that bromotrimethylsilane is reacted in the presence of triethylamine.

3. Process according to Claim 1, characterized in that the 6-halo-3-methyl-3,5-hexadienal is 6-bromo-3-methyl-3,5-hexadienal.